# EUROPEAN PATENT APPLICATION

(11) **EP 1 643 153 A2**
(43) Date of publication of application: **05.04.2006**
(21) Application number: 05292027.9
(22) Date of filing: 29.09.2005
(51) Int. Cl.: F16D 65/22

(54) **Brake cable connecting apparatus for a drum brake device**

(30) Priority: 01.10.2004 JP 2004290253
(71) Applicant: Nisshinbo Industries, Inc., Chuo-ku, Tokyo 103-8650 (JP)
(72) Inventor: Ikeda, Takashi, Nagoya-shi Aichi-ken 457-8505 (JP); Dobashi, Kiyoshi, Nagoya-shi Aichi-ken 457-8505 (JP)
(74) Representative: Thinat, Michel

(57) **Abstract**

The brake cable connecting apparatus for the drum brake which ensures easy connecting operation between the brake cable and the brake lever and also ensures rigid connection therebetween, i.e., the brake cable cannot easily be disconnected from the brake lever (30) after connected thereto. The brake cable connecting apparatus for the drum brake comprises the seating (32) extending toward the back plate (10) in the free end (30b) of the brake lever (30) and the cable inserting groove (32a) formed in the seating (32) at the back plate (10) side. The clearance (40) is formed between the end of the seating (32) and the back plate (10) to allow the inner cable (51) to pass therethrough only when the inner cable is forcibly deformed.

## Description

### BACKGROUND OF THE INVENTION

### Field of the Invention

The invention relates to a drum brake device and more particularly to a brake cable connecting apparatus for connecting a brake cable, functioning as a remote force transmitting member, to a brake lever. Description of the Related Arts

A conventional brake cable connecting apparatus for a drum brake is such that at a free end of a brake lever, a seating is extended and intersected with a brake cable at an axis thereof; that an inner cable of the brake cable is retained in a cable inserting groove formed in the seating in a back plate side; and that a cable end fitting of the brake cable is seated in the cable release side of the seating. The conventional type of the drum brake is disclosed in U.S. Patent Number 5,137,120. In the conventional apparatus for a drum brake, as a cable disconnection prevention configuration before adjusting a brake cable stroke after installing the drum brake device in a vehicle, both ends of a coil spring are mounted on each of a cable plug-in section of the back plate and on the free end of the brake lever, forming a guiding member with a structure which makes the amount of deflection smaller by limiting the deflection of the inner cable in effect to the short section between the guiding member and the brake lever.

In the conventional structure, the coil spring, as the guiding member, is installed on the free end of the brake lever, thereby making the operation of installing the coil spring more complicated, which increased the time necessary for the installation. In addition, the complex shapes of the brake lever increase the material cost and manufacturing cost.

### SUMMARY OF THE INVENTION

It is an object of the invention to resolve the problem of requiring the complicated operation when the brake cable is connected to the brake lever and increasing parts cost and assembling cost.

This invention is aimed to accomplish easy connecting operation of the brake cable to the brake lever and is to make the connection in the way that the brake cable cannot easily be disconnected from the brake lever after the connecting operation of the brake cable to the brake lever. Accordingly, the brake cable connecting apparatus for the drum brake according to the invention is structured such that a seating of the brake lever on which a cable end fitting is seated is intersected with the brake cable at the axis thereof; a cable inserting groove is formed in a back plate side of the seating; and a clearance is formed between the seating of the brake lever and the back plate so as to allow a forcibly deformed inner cable to pass therethrough when the inner cable of the brake cable is retained in the cable inserting groove.

The brake cable connecting apparatus for the drum brake of the first invention in this application comprises, comprising: a brake lever pivotally supported on one of a pair of brake shoes moveably mounted on a back plate, the brake lever has a seating at a free end thereof, which is bent to extend toward the back plate and further has a cable inserting groove facing the back plate; and a brake cable routed through the back plate and connected to the free end of the brake lever, the brake cable has an inner cable and a cable end fitting fixed on an end of the inner cable that is seated on a seating formed at the free end of the brake lever, wherein a clearance is configured between an end of the seating of the brake lever and the back plate so as to allow the forcibly deformed inner cable to pass therethrough when the inner cable is inserted in the cable inserting groove.

The brake cable connecting apparatus for the drum brake of the second invention in this application is based on the above-mentioned first invention, wherein the cable inserting groove of the seating of the brake lever is an L-shape groove consisting of two parts; a lead-in groove facing the back plate and a connecting groove extending from a bottom part of the lead-in groove in a direction which intersects the lead-in groove..

The brake cable connecting apparatus for the drum brake of the third invention in this application is based on the above-mentioned first or second invention, wherein a cable end fitting supporter is integrally formed at the end of the seating of said brake lever so as to restrict a movement of the cable end fitting toward the back plate

The brake cable connecting apparatus for the drum brake of the fourth invention in this application is based on the above-mentioned first through/or fourth invention, wherein the clearance between the end of the seating of the brake lever and the back plate is designed to allow the inner cable to pass therethrough but to prevent the cable end fitting from passing therethrough..

The brake cable connecting apparatus for the drum brake according to the invention provides the following specific advantages.

The brake cable connecting apparatus of the invention is able to provide a simple connection of the brake cable to the free end of the brake lever only by forcibly deforming the inner cable toward the back plate and moving the inner cable to the opening of the cable inserting groove because the configuration between the seating of the brake lever and the back plate is formed so as to allow the forcibly deformed inner cable to pass therethrough, and therefore even unskilled operators are able to easily perform the connecting operation of the brake cable to the brake lever.

The brake cable connecting apparatus of the invention is able to ensure the disconnection prevention configuration of the brake cable after connecting the brake cable to the brake lever because once the cable end fitting is seated on the seating of the brake lever, the inner cable is not disconnected from the brake lever unless moving in parallel along the back plate after forcibly deforming the inner cable by an external force.

The brake cable connecting apparatus of the invention is further able to enhance the rigid connection between the brake cable and the brake lever, i.e., making it more difficult to be disconnected, after making the connection therebetween by forming the overall shape of the cable inserting groove in the seating of the brake lever into an L-shape or/and by forming the cable end supporter integrally at the end of the seating of the brake lever.

The brake cable connecting apparatus of the invention has a simple configuration to ensure the prevention of the brake cable disconnection utilizing the back plate, in which the seating of the brake lever is bent so as to extend toward the back plate, and the cable inserting groove is formed in the seating facing to the back plate, thereby enabling the easy production at a low cost with press work, mainly bending, while substantially reducing its weight, thereby requiring smaller space for its arrangement.

### BRIEF DESCRIPTION OF THE DRAWINGS

The above and other objects of the present invention will become readily apparent by reference to the following detailed description when considered in conjunction with the accompanying drawings wherein:

FIG. 1 is a plan view of the drum brake device applying the brake cable connecting apparatus of a first embodiment of the invention;

FIG. 2 is a cross sectional view of FIG. 1 taken along the line II-II;

FIG. 3 is a partly fractured perspective view of the connecting section between the free end of the brake lever and the brake cable;

FIG. 4 (A) is a view illustrating the connecting operation of the brake cable to the brake lever;

FIG. 4 (B) is a view illustrating the configuration to prevent disconnection of the brake cable from the brake lever;

FIG. 5 is a view illustrating the brake cable connecting apparatus of a second embodiment;

FIG. 6 is a view illustrating the brake cable connecting apparatus of a third embodiment; and

FIG. 7 is a cross sectional view of the brake cable connecting apparatus of the modification of embodiments.

### DETAILED DESCRIPTION OF THE PREFERRED EMBODIMENTS

Having a simple structure without adding any new parts, the brake cable connecting apparatus of the invention has realized the purposes of ensuring in the connecting operation of the brake cable to the brake lever both easy connecting operation and rigid connection, i.e., the condition that the brake cable cannot easily be disconnected from the brake lever after the connecting operation is completed. First Embodiment

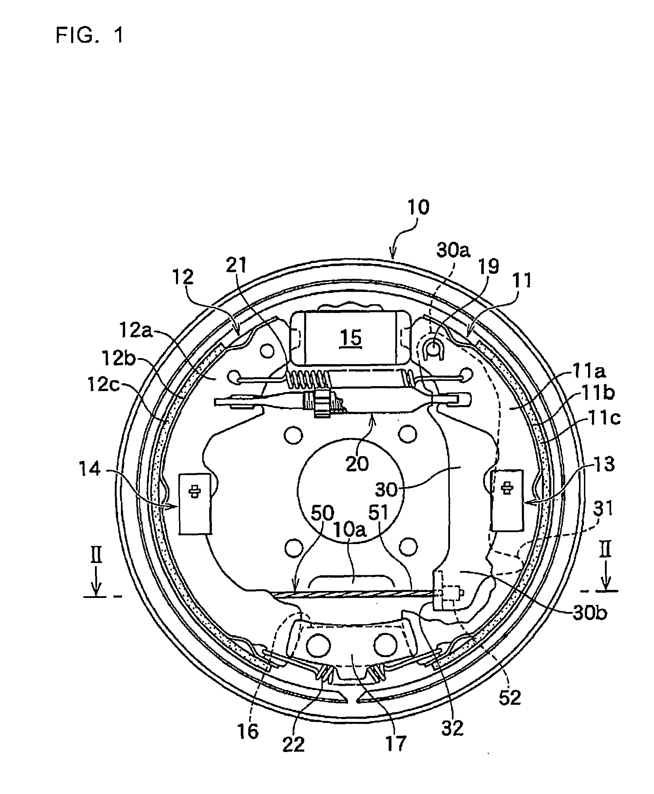

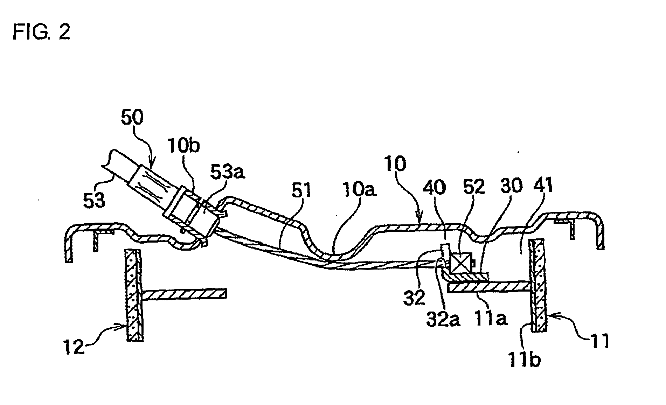

FIG. 1 shows a leading-trailing type drum brake device, and FIG. 2 is a cross sectional view of FIG. 1 taken along the line II-II;

Brake shoes 11, 12 comprise shoe webs 11 a, 12a, shoe rims 11 b, 12b and linings 11 c, 12c, wherein the shoe webs 11 a, 12a and the shoe rims 11 b, 12b are respectively connected to form a T-shape cross-section and the linings 11 c, 12c are respectively fixed on the peripheral surfaces of the shoe rims 11 b, 12b. Each of the brake shoes 11, 12 is moveably mounted on a back plate 10 which is fixed to a stationary part (not shown in the figures) of a vehicle by a shoe hold mechanisms 13, 14, respectively. Upper adjacent ends of the shoe webs 11 a, 12a moveably engage with a wheel cylinder 15 fixed on the back plate 10 so as to be able to transmit an operational force of the wheel cylinder 15 to the brake shoes 11, 12. Lower adjacent ends of the shoe webs 11a, 12a are supported by an anchor 16 fixed on the back plate 10.

A plate-like brake lever 30 is superposed on the back plate side of the shoe web 11 a, and a proximal end 30a is pivotally supported with a pin 19 as a fulcrum at an upper side of the shoe web 11 a. A stopper 31 of the brake lever 30 projects toward the shoe rim and abuts against the inner circumference of the shoe rim 11 b, thereby restricting the rotation (or the counterclockwise rotation) of the brake lever 30 in the cable release direction. A free end 30b of the brake lever 30 has a seating 32 where a brake cable 50 (as described later) is connected.

A shoe clearance adjustment strut 20, one of the components constituting a parking brake mechanism, is provided adjacent to the wheel cylinder 15 and is extended between the shoe web 12a of the brake shoe 12 and the brake lever 30.

Shoe return springs 21, 22 are stretched between both brake shoes 11 and 12, which urge both brake shoes 11 and 12 toward each other and abut against the shoe clearance adjustment strut 20 and the anchor 16 to restrict the initial positions of the brake shoes 11, 12.

The brake cable 50 is comprised of an inner cable 51, a cable end fitting 52, which is fixed on an end of the inner cable 51, and an outer casing 53, etc. A brake side of the inner cable 51, slidably provided in the outer casing 53, is smoothly guided in an appropriate direction by a protrusion 10a formed on the back plate 10, and the cable end fitting 52 is seated on the seating 32 of the brake lever 30. A casing cap 53a, fixed in the end of the outer casing 53 at a brake side, is inserted into and attached to an insertion guide 10b fixed in the back plate 10.

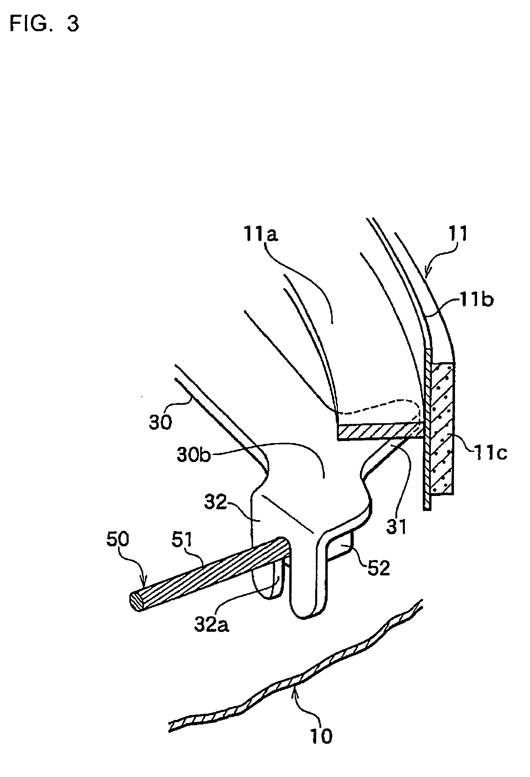

Based on FIG. 3, where the free end 30b of the brake lever 30 in FIG.2 is viewed from an anchor side, the structure of the free end 30b will be explained next. The seating 32 is integrally provided in the free end 30b away from the shoe rim 11 b by bending itself at right angles toward the back plate 10 so that the cross-section forms an L-shape.

A cable inserting groove 32a is formed in the seating 32 from the end thereof facing the back plate 10 toward the bending section to be able to seat the cable end fitting 52. A width of the cable inserting groove 32a is designed to allow the inner cable 51 to pass therethrough but to prevent the cable end fitting 52 from passing therethrough.

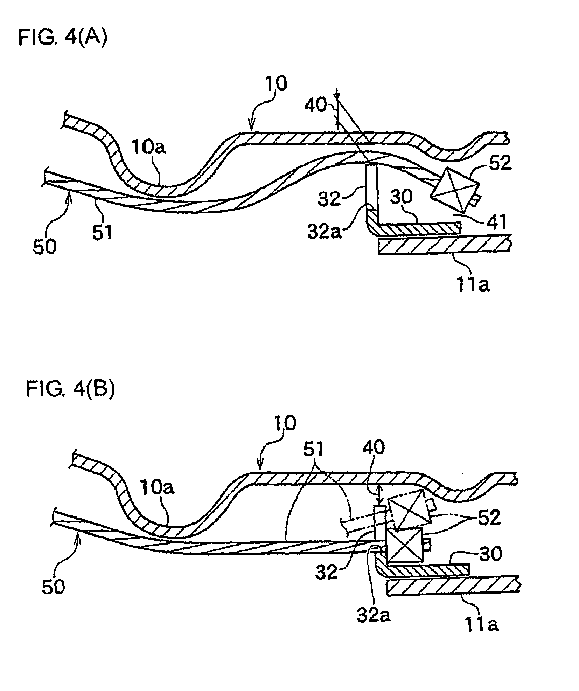

Based on FIGS. 4(A) and (B), the view illustrating the connecting section between the brake lever 30 and the brake cable 50 in FIG. 2, the functional relationship between the seating 32 and the back plate 10 will be explained next. The invention is configured such that the clearance 40 between the end of the seating 32 of the brake lever 30 and the back plate 10 is designed larger than the diameter of the inner cable 51 and smaller than the minimum outside dimension of the cable end fitting 52 in a direction perpendicular to the cable axis. The protrusion 10a is formed in the back plate 10 towards the bottom of the brake drum (not shown in the figures) to smoothly support the inner cable 51 in the vicinity of the cable end fitting 52. In other words, the functional relationship between the back plate 10 and the brake lever 30 allows the inner cable 51 to pass therethrough only on condition that the inner cable 51 is forcibly deformed but prevents the cable end fitting 52 seated in the brake lever 30 and the inner cable 51 from passing therethrough on any other conditions.

As shown in FIG. 4 (A), the clearance 40 is formed such that the inner cable 51 is allowed to pass therethrough when the inner cable 51 is forcibly deformed toward the back plate 10 between the cable end fitting 52 and the protrusion 10a of the back plate 10.

A process of connecting the brake cable to the brake lever will be explained next. The inner cable 51 routed through the insertion guide 10b shown in FIG. 2 is smoothly guided along the protrusion 10a after being inserted within the back plate 10 as shown in FIG. 4 (A).

The inner cable 51 is pulled enough in length so that the cable end fitting 52 goes across the seating 32, and while the cable end fitting 52 is retained in a space 41 formed by the brake lever 30, the back plate 10 and the brake shoe 11, the inner cable 51 is forcibly deformed by hand toward the back plate 10 between the protrusion 10a and the cable end fitting 52 and inserted from the side of the seating 32 to the clearance 40. The flexural range of the inner cable 51 is able to cover a relatively long distance from the protrusion 10a to the cable end fitting 52, which enables the inner cable 51 to be inserted, by flexing, to the clearance 40 without difficulty.

When the inner cable 51 is released from the flexural condition at the position of the cable inserting groove 32a of the brake lever 30, the inner cable 51 moves by restoring force thereof in a restoration direction away from the back plate 10 and is retained within the cable inserting groove 32a.

Subsequently, the cable end fitting 52 is seated on the seating 32 by slightly pulling the inner cable 51, thereby completing the process of connecting the brake cable 50 to the brake lever 30.

FIG. 4 (B) shows the condition after completing the connection of the brake cable 50 to the brake lever 30. After completing the connection, even if the cable end fitting 52 moves toward the back plate 10, shown by double-dashed chain lines, the inner cable 51 is retained within the cable inserting groove 32a, thereby preventing the disconnection of the brake cable 50 from the brake lever 30. Especially in the embodiment of the invention, as the inner cable 51 is supported on the protrusion 10a and then crooked, the restoring force, trying to return to a straight shape, functions as a biasing force toward the bottom of the cable inserting groove 32a, thereby preventing the cable end fitting 52 movement toward the back plate 10 unless external force is added. Moreover, if the inner cable 51 loosens and an external force displaces the inner cable 51 from the protrusion 10a, the clearance 40 is designed to be smaller than the minimum outside dimension of the cable end fitting 52, thereby preventing the disconnection of the cable end fitting 52 from the seating 32 unless the inner cable 51 is forcibly deformed. As shown in FIG. 4 (B), when the cable fitting 52 is seated on the seating 32, even if the inner cable 51 subsequently loosens, the prevention of the disconnection of the cable end fitting 52 from the seating 32 is able to be ensured.

Moreover, when the brake cable 50 is disengaged from the brake lever 30, the inner cable 51 is moved backward in the cable release direction, forcibly deformed toward the same direction as the process of connecting, pushed from the cable inserting groove 32a in the above condition, and passed the clearance 40 along the back plate 10.

Other embodiments will be explained below, where the same parts as those of the above embodiment are described with the same reference numbers, and the detailed explanation of which are omitted.

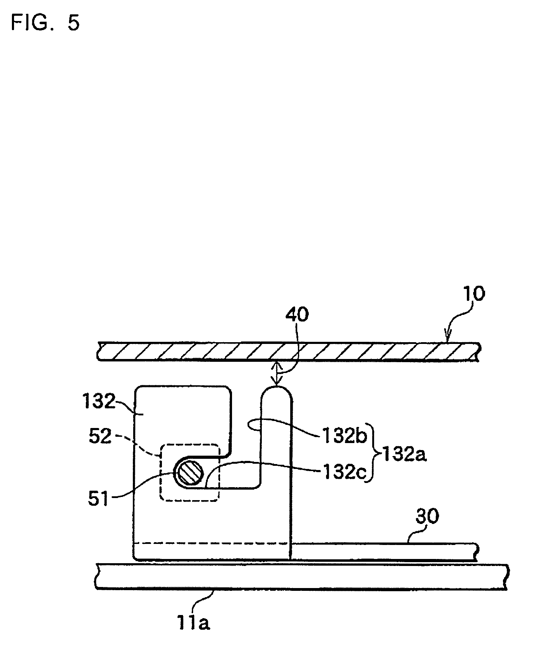

FIG. 5 shows another embodiment where the cable inserting groove 132a of the seating 132 of the brake lever 30 is formed into an L-shape. The cable inserting groove 132a in this embodiment consists of a lead-in groove 132b formed from the end of the seating 132 toward the bending section, and a connecting groove 132c extending from a bottom inner part of the lead-in groove 132b in the direction which intersects the lead-in groove 132b. The inner cable 51 guided in the lead-in groove 132b via the clearance 40 between the end of the seating 132 of the brake lever 30 and the back plate 10 is guided in the connecting groove 132c and then the cable end fitting 52 is seated on the seating 132. In addition, in this embodiment, a retaining groove, which supports the inner cable 51 and restricts the sliding in a crosswise/lateral direction, is formed in the protrusion 10a in FIG. 1, thereby restricting the free sliding of the inner cable 51 along the connecting groove 132c.

In this embodiment, as the displacement of the inner cable 51 toward the back plate 10 is restricted by the connecting groove 132c, together with the configuration of the above-mentioned first embodiment, a higher-level of performance to prevent the disconnection of the brake cable 50 from the brake lever 30 is ensured.

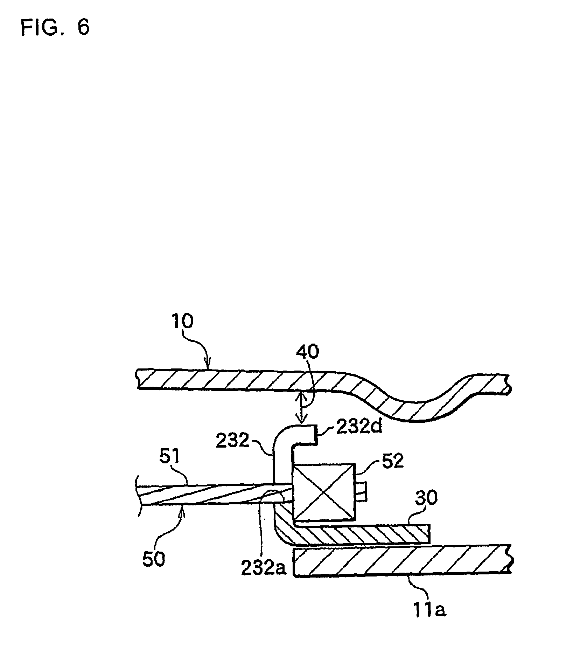

FIG. 6 shows another embodiment where a cable end supporter 232d is formed at the end of the seating 232 of the brake lever 30 as the disconnection prevention configuration of the brake cable 50 by bending/folding the plate material, which is able to prevent the cable end fitting 52 from running off the seating 232. The cable end supporter 232d is formed in one or both sides of the seating 232 of the brake lever 30 across the cable inserting groove 232a. As the displacement of the cable end fitting 52 is restricted also by the cable end supporter 232d shown in this embodiment, more effective prevention of the disconnection of the brake cable 50 from the brake lever 30 is ensured.

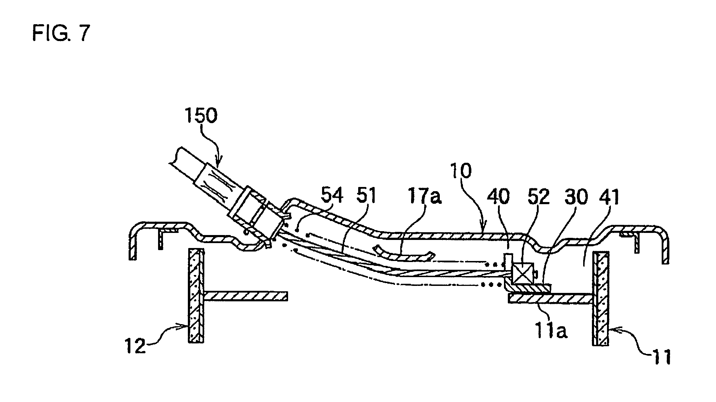

FIG. 7 shows the modification of the above-mentioned embodiments. In the modification, the brake cable 150, where a lever return spring 54 is freely carried over the inner cable 51, is applied and a cable guide section 17a is integrally formed in a retaining plate 17 (shown in FIG. 1) fixed together with the anchor 16 on the back plate 10 instead of the protrusion 10a of the back plate 10 as the supporting means of the inner cable 51 shown in the first embodiment. Also, the brake type is not limited to the above-mentioned leading-trailing type, and the invention is clearly applicable to other types of brakes, such as a duo-servo type or a drum brake device without the wheel cylinder 15, specially designed for a parking brake.

It is readily apparent that the above-described embodiments have the advantage of wide commercial utility. It should be understood that the specific form of the invention hereinabove described is intended to be representative only, as certain modifications within the scope of these teachings will be apparent to those skilled in the art. Accordingly, reference should be made to the following claims in determining the full scope of the invention.

## Claims

1. A brake cable connecting apparatus for a drum brake, comprising:
a brake lever (30) pivotally supported on one of a pair of brake shoes (11, 12) moveably mounted on a back plate (10), said brake lever (30) has a seating (32) at a free end (30b) thereof, which is bent to extend toward said back plate (10) and further has a cable inserting groove (32a) facing said back plate (10); and
a brake cable (50, 150) routed through said back plate and connected to said free end (30b) of the brake lever (30), said brake cable (50, 150) has an inner cable (51) and a cable end fitting (52) fixed on an end of said inner cable (51) that is seated on the seating (32) formed at the free end (30b) of the brake lever (30), **characterized in that**
a clearance (40) is configured between an end of said seating (32) of the brake lever (30) and said back plate (10) so as to allow the forcibly deformed inner cable (51) to pass therethrough when said inner cable (51) is inserted in said cable inserting groove (32a).

2. The brake cable connecting apparatus for the drum brake according to Claim 1, **characterized in that**
said cable inserting groove (132a) of the seating of the brake lever (30) is an L-shape groove consisting of two parts;
a lead-in groove (132b) opened facing said back plate (10) and
a connecting groove (132c) extending from a bottom part of said le ad-in groove (132b) in a direction which intersects said lead-in groove (13 2b).

3. The brake cable connecting apparatus for the drum brake according to Claim 1, **characterized in that**
a cable end fitting supporter (232d) is integrally formed at the end of said seating of said brake lever so as to restrict a movement of said cable end fitting toward said back plate.

4. The brake cable connecting apparatus for the drum brake according to Claim 2, **characterized in that**
a cable end fitting supporter (232d) is integrally formed at the end of said seating of said brake lever so as to restrict a movement of said cable end fitting toward said back plate.

5. The brake cable connecting apparatus for the drum brake according to Claim 1, **characterized in that**
said clearance (40) between the end of the seating of the brake lever and the back plate is designed to allow said inner cable to pass therethrough but to prevent the cable end fitting from passing therethrough.

6. The brake cable connecting apparatus for the drum brake according to Claim 2, **characterized in that**
said clearance (40) between the end of the seating of the brake lever and the back plate is designed to allow said inner cable to pass therethrough but to prevent the cable end fitting from passing therethrough.

7. The brake cable connecting apparatus for the drum brake according to Claim 3, **characterized in that**
said clearance (40) between the end of the seating of the brake lever and the back plate is designed to allow said inner cable to pass therethrough but to prevent the cable end fitting from passing therethrough.

8. The brake cable connecting apparatus for the drum brake according to Claim 4, **characterized in that**
said clearance (40) between the end of the seating of the brake lever and the back plate is designed to allow said inner cable to pass therethrough but to prevent the cable end fitting from passing therethrough.
